(19) Europäisches Patentamt
European Patent Office
Office européen des brevets

(11) **EP 3 571 544 B1**

(12) **FASCICULE DE BREVET EUROPEEN**

(45) Date de publication et mention de la délivrance du brevet:
**26.04.2023 Bulletin 2023/17**

(21) Numéro de dépôt: **18702774.3**

(22) Date de dépôt: **19.01.2018**

(51) Classification Internationale des Brevets (IPC):
**G02B 27/09** (2006.01)    **H01S 3/00** (2006.01)
**G02B 26/00** (2006.01)    **G02B 26/08** (2006.01)

(52) Classification Coopérative des Brevets (CPC):
**G02B 27/0938; G02B 26/00; G02B 26/0816**

(86) Numéro de dépôt international:
**PCT/FR2018/050131**

(87) Numéro de publication internationale:
**WO 2018/134533 (26.07.2018 Gazette 2018/30)**

(54) **DISPOSITIF POUR CHANGER LA FORME D'UN FAISCEAU LUMINEUX**

VORRICHTUNG ZUR VERÄNDERUNG DER FORM EINES LICHTSTRAHLS

DEVICE FOR CHANGING THE SHAPE OF A LIGHT BEAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.01.2017 FR 1750403**

(43) Date de publication de la demande:
**27.11.2019 Bulletin 2019/48**

(73) Titulaire: **Cailabs**
**35200 Rennes (FR)**

(72) Inventeurs:
• **BOUCHER, Pauline**
**94130 Nogent-sur-Marne (FR)**
• **PINEL, Olivier**
**35000 Rennes (FR)**
• **MORIZUR, Jean-François**
**35000 Rennes (FR)**
• **LABROILLE, Guillaume**
**35000 Rennes (FR)**
• **TREPS, Nicolas**
**75011 Paris (FR)**

(74) Mandataire: **IP Trust**
**2, rue de Clichy**
**75009 Paris (FR)**

(56) Documents cités:
**US-A- 5 835 280**

• **J-F MORIZUR ET AL: "Programmable unitary spatial modes manipulation", ARXIV.ORG, CORNELL UNIVERSITY LIBRARY, 201 OLIN LIBRARY CORNELL UNIVERSITY ITHACA, NY 14853, 19 mai 2010 (2010-05-19), XP080477442, DOI: 10.1364/JOSAA.27.002524**

**Description**

**DOMAINE DE L'INVENTION**

L'invention concerne un procédé de traitement d'un faisceau lumineux. Elle concerne également un dispositif de traitement permettant la mise en oeuvre d'un tel traitement, et plus particulièrement, un dispositif pour changer la forme d'un faisceau lumineux.

**ARRIERE PLAN TECHNOLOGIQUE DE L'INVENTION**

Les faisceaux laser sont utilisés dans de nombreux types d'industries du fait des propriétés intéressantes qui les caractérisent. On peut par exemple nommer à titre d'exemples la découpe par laser dans le domaine de la mécanique, les fibres optiques dans le domaine des télécommunications, ou bien les diverses méthodes de mesure employant un laser. Une des propriétés les plus intéressantes d'un faisceau laser est qu'il s'agit d'un faisceau de lumière cohérente.

Dans chacune de ces applications, afin de bénéficier au mieux des propriétés du faisceau laser, il est préférable, voire nécessaire, de modifier certains paramètres du faisceau laser une fois émis par sa source avant de l'exploiter, en particulier les paramètres du profil transverse du faisceau, c'est-à-dire l'amplitude, la phase et la polarisation dudit faisceau. Dans tout ce qui suit, le terme « paramètre » renverra systématiquement à un paramètre du profil transverse du faisceau lumineux, sauf mention contraire.

Deux types de paramètres existent.

Les paramètres du premier type peuvent être contrôlés avec maîtrise. On peut ainsi relativement aisément contrôler ces paramètres pour les faire varier de manière continue, de manière rapide (c'est-à-dire à haute fréquence) et/ou avec une grande précision. La position du faisceau ou son orientation par rapport à un axe de référence font partie de ce premier type de paramètres.

En revanche, les paramètres du second type peuvent être contrôlés, mais avec moins de liberté que ceux du premier type. Par exemple, on pourra contrôler un tel paramètre avec une grande précision, mais seulement avec une fréquence de contrôle suffisamment faible. La défocalisation (plus communément désignée par le terme anglo-saxon « defocus ») du faisceau fait partie de ce second type de paramètre.

Lorsqu'il est nécessaire de modifier un paramètre du second type, et lorsqu'il est nécessaire de le faire avec maîtrise, il serait intéressant de bénéficier des avantages des paramètres du premier type.

Certains dispositifs permettent de convertir la variation d'un paramètre spécifique du faisceau laser en une variation d'un paramètre tout aussi spécifique du faisceau laser. Il s'ensuit que ces dispositifs ne sont adaptés que pour un nombre restreint d'applications du faisceau laser. Parmi ces dispositifs, on peut citer les lentilles convergentes qui permettent, dans la configuration dite de Fourier, de réaliser la transformée de Fourier du profil d'amplitude complexe du faisceau, transformant notamment un angle par rapport à l'axe optique de la lentille en un déplacement dans le plan normal à cet axe. Inversement un déplacement dans le plan normal à l'axe optique de lentille se traduit par un angle par rapport à cet axe. On peut aussi citer l'autofocalisation par effet Kerr : le profil d'intensité modifie le profil transverse à travers des interactions avec le matériau traversé. Ainsi, l'intensité d'un faisceau détermine la focalisation qu'il subira lors de la traversée du matériau. Enfin, les réseaux permettent de modifier le profil transverse du faisceau réfléchi ou transmis en modifiant l'angle d'incidence du faisceau sur le réseau.

Au surplus, un des dispositifs conventionnellement utilisés pour modifier la forme d'un faisceau lumineux fonctionne en absorption. En général et de manière simplifiée, ce type de dispositif consiste en une plaque présentant une ouverture de forme prédéterminée à travers de laquelle on fait passer le faisceau. Ainsi, la matière de la plaque autour de l'ouverture absorbe la partie du faisceau ne se conformant pas à la forme de l'ouverture. On obtient la forme souhaitée pour le faisceau, mais la partie du faisceau absorbée par la plaque constitue une perte d'énergie non négligeable. De plus, si le faisceau lumineux présente une importante puissance surfacique, cette solution n'est pas satisfaisante, car l'élévation de la température de la plaque engendrée par l'absorption du faisceau peut détériorer le dispositif. Ce type de dispositif n'est donc pas compatible avec les sources lumineuses de haute puissance.

De manière plus générale, il existe aussi des modulateurs spatiaux de lumière (généralement désignés par le sigle SLM pour les termes anglo-saxons « Spatial Light Modulator »), qui permettent la modulation spatiale en intensité, en phase et en polarisation d'un faisceau lumineux. Mais ces dispositifs présentent également des inconvénients. Ils sont en effet généralement lents et relativement coûteux. De plus, lorsqu'un SLM est utilisé afin de réaliser une modulation spatiale d'un faisceau, on ne peut pas s'affranchir d'importantes pertes énergétiques, si bien qu'il est préférable d'éviter de recourir à ce type de dispositif, notamment s'il est utilisé avec une source lumineuse de haute puissance.

Un but de l'invention est de permettre la conversion de la variation d'un paramètre du faisceau laser, notamment la position transverse et/ou l'angle d'incidence et/ou l'angle de rotation du faisceau, en la variation de la forme de ce faisceau.

## BREVE DESCRIPTION DE L'INVENTION

En vue de la réalisation de ce but, l'objet de l'invention propose un dispositif selon la revendication 1 pour alterner entre différentes formes spécifiques d'un faisceau lumineux généré par une source de lumière, le dispositif comprenant un dispositif de conversion multiplan pour appliquer une transformation unitaire à un faisceau lumineux par une succession de transformations élémentaires et disposé vis-à-vis de la source de lumière pour que le faisceau de lumière soit émis dans le dispositif de conversion multiplan selon un axe de référence.

Le dispositif comprend des moyens automatisés, disposés en amont du dispositif de conversion multiplan, et aptes à faire varier la position transverse et/ou l'angle d'incidence du faisceau par rapport à l'axe de référence et/ou à faire varier l'angle de rotation du faisceau autour de l'axe de référence.

Le dispositif de conversion multiplan est configuré pour transformer une variation de la position transverse et/ou de l'angle d'incidence et/ou de l'angle de rotation du faisceau en un changement de la forme spécifique du faisceau lumineux

Le dispositif de conversion de lumière multiplan, plus communément désigné par les termes anglo-saxons « Multi-Plane Light Converter » (MPLC), est notamment décrit dans l'article « Programmable unitary spatial mode manipulation » publié dans le « Journal of the Optical Society of America A », volume 27, issue 11. Il y est notamment indiqué qu'il est possible de décrire toute transformation unitaire d'un faisceau de lumière cohérente par une succession de transformations simples ou élémentaires. Le MPLC est également décrit dans le document EP-2 469 221.

Ainsi, l'invention permet la transformation de la variation d'un premier paramètre (la position transverse et/ou l'angle d'incidence du faisceau par rapport à l'axe de référence et/ou à faire varier l'angle de rotation du faisceau autour de l'axe de référence) en une variation d'un second paramètre (de la forme du faisceau lumineux), ces deux paramètres pouvant être choisis indépendamment l'un de l'autre. On s'affranchit donc des contraintes imposées par les dispositifs connus cités dans ce qui précède. En d'autres termes, lorsqu'on souhaite modifier un paramètre du faisceau (le second paramètre), on choisit le paramètre dont on contrôle le mieux les variations (le premier paramètre). On se sert alors du MPLC pour bénéficier du contrôle maîtrisé des variations du premier paramètre sur la modification du second paramètre.

Le MPLC étant généralement employé pour corriger un faisceau lumineux après avoir traversé un milieu déformant le faisceau, l'invention constitue une utilisation astucieuse du MPLC pour améliorer le contrôle du faisceau.

De plus, dans un mode de réalisation, le MPLC fonctionne en réflexion. Cela signifie que le faisceau entrant dans le MPLC ne subit que des réflexions et n'est donc pas absorbé. L'invention permet donc de ne pas subir les inconvénients liés aux dispositifs fonctionnant en absorption, ce qui rend l'invention compatible avec les sources de lumière à haute puissance telles que peuvent l'être les sources laser.

Des modes de réalisation additionnels de l'invention sont définis dans les revendications dépendantes.

## BREVE DESCRIPTION DES DESSINS

On va maintenant décrire plusieurs modes de réalisation de l'invention à l'appui des dessins annexés sur lesquels :

- la figure 1 est un schéma illustrant un dispositif de traitement d'un faisceau lumineux selon l'invention,
- les figures 2a et 2b illustrent deux montages optiques permettant respectivement de faire varier l'angle de la direction de propagation du faisceau lumineux par rapport à un axe de référence et de décaler transversalement la direction de propagation du faisceau lumineux par rapport à l'axe de référence,
- les figures 3a, 3b et 3c illustrent certains paramètres du faisceau lumineux,
- la figure 4 illustre de manière schématique une première application de l'invention,
- les figures 5 à 6 illustrent de manière schématique un dispositif pour changer la forme d'un faisceau lumineux conforme à l'invention.

## DESCRIPTION DETAILLEE DE L'INVENTION

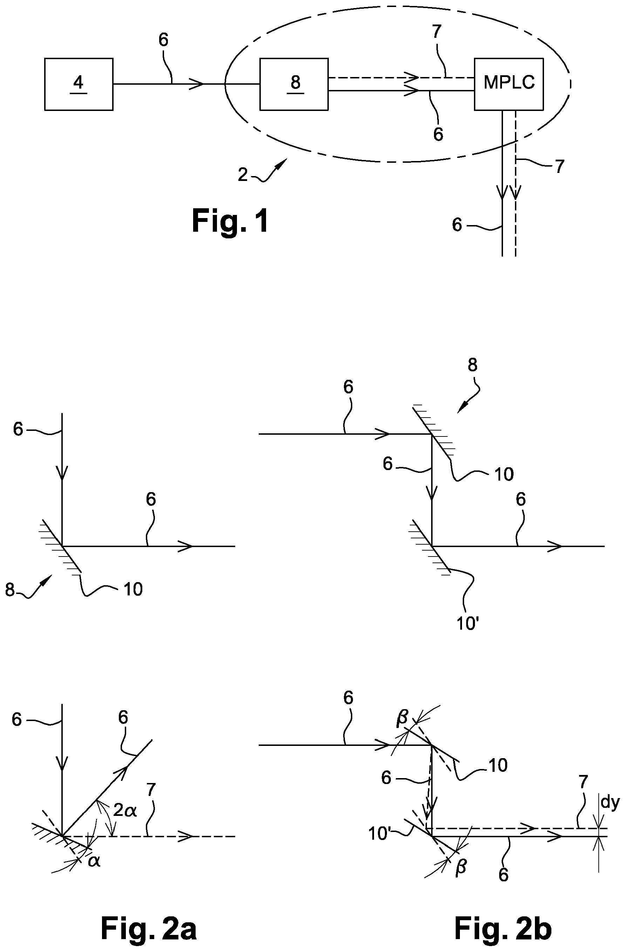

On a représenté sur la figure 1 un dispositif de traitement d'un faisceau lumineux 2. Ce dispositif 2 est placé en face d'une source de lumière cohérente 4 apte à générer un faisceau de lumière cohérente 6. Il peut notamment s'agir d'une source laser.

Le dispositif 2 comprend des moyens automatisés 8 aptes à faire varier un premier paramètre du profil transverse du faisceau lumineux 6. Lorsque ces moyens automatisés 8 ne sont pas activés, le faisceau lumineux 6 se propage selon un axe dit de référence 7.

On a représenté en figures 2a et 2b deux exemples de moyens automatisés 8.

Dans la figure 2a, les moyens automatisés 8 comprennent un miroir 10, dont on peut commander l'orientation, placé sur la trajectoire du faisceau lumineux 6. En faisant pivoter d'un angle $\alpha$ le miroir par rapport à un bâti du dispositif 2 selon un axe Z tel que représenté sur la figure 2a, on fait varier de 2α l'angle de la direction de propagation du faisceau lumineux 6 par rapport à l'axe de référence 7. Dans ce cas, le premier paramètre est l'angle d'incidence du faisceau lumineux 6 par rapport à l'axe de référence 7.

Dans la figure 2b, les moyens automatisés 8 comprennent deux miroirs 10, 10' parallèles agencés de sorte que le faisceau lumineux 6 est réfléchi par les deux miroirs 10, 10'. En faisant pivoter d'un angle β les deux miroirs 10, 10' dans des sens contraires par rapport à un bâti du dispositif 2 selon l'axe Z, on décale transversalement de dy la direction de propagation du faisceau lumineux 6 par rapport à l'axe de référence 7. dy est fonction de l'écart entre les miroirs et de l'angle β. Dans ce cas, le premier paramètre est la position transverse du faisceau lumineux 6 par rapport à l'axe de référence 7.

En référence à la figure 1, le dispositif 2 comprend un dispositif de conversion de lumière multiplan (MPLC). Le MPLC est ici situé en aval des moyens automatisés 8 en considérant la direction de propagation du faisceau lumineux 6, mais on pourrait prévoir de placer le MPLC en amont des moyens automatisés 8. Le MPLC est agencé pour transformer la variation du premier paramètre en une variation d'un second paramètre du profil transverse du faisceau lumineux 6. Le fonctionnement du MPLC est décrit dans l'article mentionné dans ce qui précède et ne sera pas décrit de nouveau dans ce qui suit.

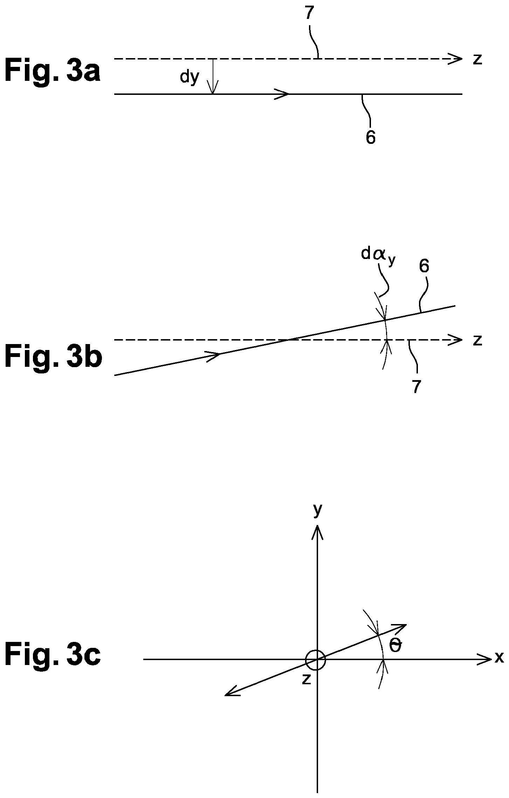

On a illustré en figures 3a, 3b et 3c certains des paramètres du faisceau 6. Dans ces figures, on se place dans un repère orthogonal d'axes x, y, z dans lesquels z un axe confondu avec l'axe de référence 7 et les axes x et y sont perpendiculaires à l'axe z.

Sur la figure 3a, dy est la position dans le plan (yz) du faisceau 6 par rapport à l'axe de référence 7. Sur la figure 3b, $d\alpha_y$ est l'angle du faisceau dans le plan (yz) du faisceau 6 par rapport à l'axe de référence 7. Sur la figure 3c, θ est l'angle de rotation autour de l'axe de référence 7.

On va maintenant présenter le principe général de l'invention.

A titre préliminaire, on sait que le champ électromagnétique décrivant le faisceau lumineux 6 peut être décrit par une fonction à plusieurs variables E(α, β, γ, ...) dans laquelle les paramètres α, β, γ, ... décrivent les paramètres qui spécifient le faisceau lumineux 6, comme par exemple le mode transverse qui décrit sa géométrie dans la direction transverse.

Dans le cas le plus simple, si on souhaite modifier une seule variable ou paramètre de manière continue tout en fixant tous les autres paramètres, on peut écrire à l'aide d'un développement limité :

$$E(\alpha - \alpha_0) = \sum_{i=0}^{n} \frac{\partial^i E}{\partial \alpha^i}(\alpha_0) \times \frac{(\alpha - \alpha_0)^i}{i!} + o((\alpha - \alpha_0)^n)$$

On voit apparaître dans cette équation le paramètre que l'on souhaite faire varier, α, ainsi que les modes $\frac{\partial^i E}{\partial \alpha^i}(\alpha_0)$ qui dépendent uniquement de point initial $\alpha_0$. Ceux-ci sont des modes spatiaux du champ électromagnétique. Dans le cas où ceux-ci ne sont tous pas identiques (c'est-à-dire si la trajectoire est différente de l'identité), on peut déduire de ces modes dérivés une base orthonormée du champ.

A partir d'une trajectoire donnée, c'est-à-dire du choix d'un paramètre physique à faire varier α, ainsi que d'un intervalle dans lequel on souhaite le faire varier ($[\alpha_a, \alpha_b]$), on calcule la base orthonormée qui correspond à ce mouvement. Cette base sera nommée la « base de sortie ». La taille de cette base dépend de la précision avec laquelle on souhaite suivre ladite trajectoire. Plus le nombre de modes est élevé, plus la précision est grande, selon le principe du développement limité.

On calcule également les coefficients qui permettent de décrire le mouvement dans cette base. En effet, puisqu'on utilise la version orthonormée de la base décrite par les dérivées successives du champ, les coefficients qui décrivent chacune des positions ne sont pas triviaux.

La seconde étape consiste à choisir une « base d'entrée ». Le choix de cette base est conditionné par deux éléments. D'une part, les paramètres qui seront décrits dans cette base doivent être contrôlables avec maîtrise, c'est-à-dire de manière continue, précise et sur une course suffisante. C'est le cas par exemple de la position transverse du faisceau lumineux 6. D'autre part, l'ensemble des coefficients nécessaires à la description de la trajectoire choisie en « sortie » doit être réalisable en « entrée ». L'opération à réaliser est décrite ci-dessous.

$$\begin{pmatrix} f_0(\alpha) \\ f_1(\alpha) \\ \vdots \\ f_n(\alpha) \end{pmatrix} \begin{pmatrix} v_0 \\ v_1 \\ \vdots \\ v_n \end{pmatrix} = \begin{bmatrix} & MPLC & \end{bmatrix} \begin{pmatrix} f_0(\alpha) \\ f_1(\alpha) \\ \vdots \\ f_n(\alpha) \end{pmatrix} \begin{pmatrix} u_0 \\ u_1 \\ \vdots \\ u_n \end{pmatrix}$$

La base ($v_n$) décrit la base de sortie, la base ($u_n$) la base d'entrée. Les fonctions $f_n$ décrivent les coefficients de projection dans la base de sortie, qui doivent être réalisés dans la base d'entrée afin de pouvoir décrire la trajectoire voulue. Ces opérations permettent de calibrer le MPLC à l'application ici souhaitée du dispositif 2.

Première application

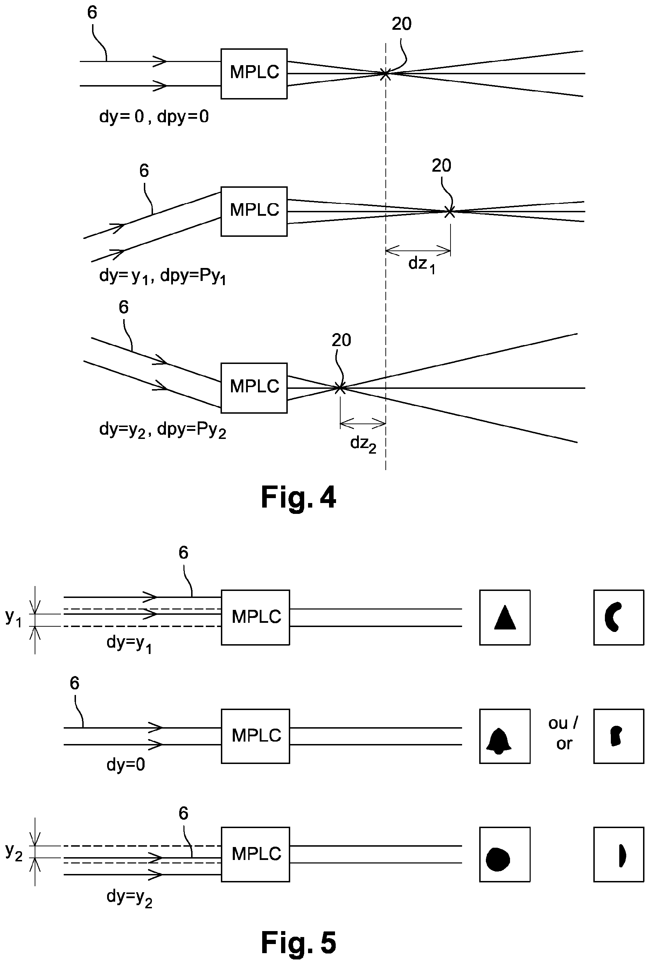

On va maintenant présenter une première application du dispositif de l'invention, en référence à la figure 4. Ici, le second paramètre, celui qu'on souhaite piloter avec maîtrise, est la défocalisation ou « defocusing » du faisceau lumineux 6, c'est-à-dire le déplacement de la position dz1, dz2 d'une focalisation 20 du faisceau 6. Le premier paramètre, celui qu'on sait piloter avec maîtrise, est la position transverse dy et/ou l'angle d'incidence dpy du faisceau lumineux 6 par rapport à l'axe de référence 7. Il pourrait s'agir également de l'angle de rotation du faisceau lumineux autour de cet axe de référence.

Les degrés de liberté choisis en « entrée » sont donc le déplacement du faisceau 6, l'inclinaison du faisceau 6 et/ou l'orientation du faisceau 6 selon une direction transverse.

La position et l'angle du faisceau lumineux 6 par rapport à l'axe de référence 7 sont des paramètres qu'on peut contrôler avec maîtrise. Cela n'est pas le cas de la position de focalisation 20 du faisceau lumineux 6. Grâce au dispositif 2, notamment au MPLC, et une approche modale de ce problème, on peut coupler la position et l'angle du faisceau lumineux 6 en entrée du MPLC à sa défocalisation en sortie. Ainsi, on peut contrôler avec maîtrise, c'est-à-dire avec précision, à haute fréquence et de manière continue, la position du point de focalisation du faisceau lumineux 6, ce sur une amplitude définie par les caractéristiques du MPLC ou autrement dit son « design ». En d'autres termes, le dispositif 2 permet la mise en oeuvre d'un procédé de traitement du faisceau lumineux 6 au moyen du MPLC dans lequel :

- on émet le faisceau lumineux 6 dans le MPLC selon l'axe de référence 7,
- on fait varier le premier paramètre, et
- par la propagation dans le MPLC, celui-ci transforme la variation du premier paramètre en une variation du second paramètre, i.e la position du point de focalisation du faisceau.

Deuxième application

On va maintenant présenter une deuxième application du dispositif de l'invention, en référence à la figure 5.

Celle-ci est une généralisation de l'application de défocalisation du premier mode de réalisation présenté dans ce qui précède. La direction et l'angle du faisceau 6 en entrée du MPLC déterminent sa décomposition dans une base de mode dite « d'entrée ». Le MPLC est configuré pour déterminer la base de sortie qui permet de passer d'une forme à une autre (faisceau au point de focus ou faisceau defocalisé, forme de triangle à forme de carré, forme de parenthèse à forme de ligne droite, etc...). Ainsi, comme cela est bien visible sur la figure 5, en l'absence d'activation des moyens automatisés 8, en position de repos (au centre de la figure 5, dy=0) le faisceau lumineux 6 se propage dans le dispositif de conversion multiplan MPLC selon l'axe de référence pour former un faisceau présentant une forme de cloche ou de trou de serrure. Lorsque les moyens automatisés 8 sont actionnés pour imposer un déplacement transverse y1 du faisceau (partie haute de la figure 5), le faisceau lumineux se propage dans le dispositif de conversion multiplan MPLC et subi une transformation conduisant à faire varier la forme du faisceau pour qu'il présente une forme de triangle ou de parenthèse. Similairement, lorsque les moyens automatisés 8 sont actionnés pour imposer un autre déplacement transverse y2 du faisceau (partie basse de la figure 5), le faisceau lumineux 6 se propage dans le dispositif de conversion multiplan MPLC et subi une autre transformation conduisant à faire varier la forme du faisceau pour qu'il présente une forme de disque ou de demi-lune.

Une application particulièrement avantageuse de ce changement de forme du faisceau est l'usinage par faisceau laser, pour lequel il est intéressant de pouvoir produire des formes de faisceau spécifiques à l'opération qu'on vise à réaliser. La présente invention fournit la capacité d'alterner rapidement entre différentes formes afin de réaliser différentes opérations avec le même faisceau et le même dispositif de mise en forme. L'angle et la position du faisceau en entrée peuvent être modifiés aisément et à haute fréquence. Cela permet d'alterner rapidement entre différentes formes de faisceau lors d'un usinage. Outre sa versatilité, l'avantage de ce système est que les miroirs utilisés pour diriger le faisceau en amont du MPLC, ainsi que le MPLC lui-même, sont compatibles avec des faisceaux haute puissance.

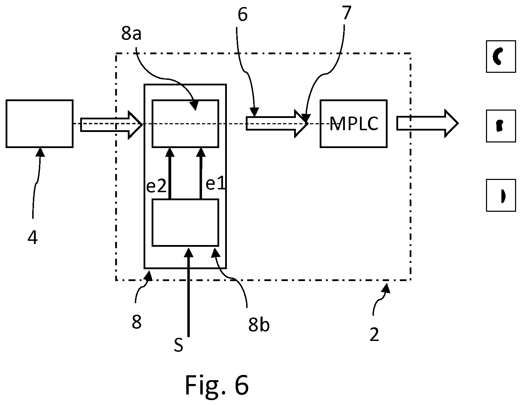

Comme cela a été représenté sur la figure 6, un dispositif 2 pour changer la forme d'un faisceau lumineux cohérent 6 comprend des moyens automatisés 8 aptes à faire varier le premier paramètre. Les moyens automatisés 8 sont disposés en amont d'un dispositif de conversions multiplan MPLC. Comme on l'a déjà énoncé, le premier (ou les premiers) paramètre est choisi parmi la position transverse du faisceau par rapport à l'axe de référence, l'angle d'incidence du faisceau par rapport à l'axe de référence, et l'angle de rotation du faisceau autour de l'axe de référence.

Les moyens automatisés peuvent comprendre un dispositif optique 8a composé d'un ou d'une pluralité de miroirs, comme cela a été évoqué dans la description générale de l'invention. Ce miroir ou ces miroirs peuvent être commandés en orientation, par l'intermédiaire de moteurs piézo-électriques ou galvanométriques desquels ils sont solidaires. On pourrait bien entendu envisager d'employer d'autres pièces optiques commandables en remplacement ou en complément des miroirs pour constituer le dispositif optique 8a. Celui-ci pourrait ainsi comprendre des cellules de Bragg, des miroirs déformables, des micro-miroirs, des modulateurs spatiaux de lumière (SLM selon l'acronyme de la dénomination anglo-saxonne « Spatial Light Modulator).

Pour commander ces pièces optiques et faire varier le ou les premiers paramètres du faisceau, les moyens automatisés 8 peuvent également comprendre un dispositif de commande 8b. Il peut s'agir d'un microprocesseur, d'un microcontrôleur ou de tout autre dispositif électronique susceptible d'appliquer un traitement à un signal d'entrée pour établir un signal de sortie. Dans le cas de l'exemple représenté sur la figure 6, le dispositif de commande 8b est muni d'une entrée S permettant de sélectionner la forme spécifique du faisceau 6. Le dispositif de commande 8b traite cette sélection pour établir une ou une pluralité de commandes e1, e2 pour piloter l'orientation du ou des miroirs, ou plus généralement pour piloter les pièces optiques commandables, du dispositif optique 8a et faire varier le (ou les) premier paramètre, c'est-à-dire la position transverse, l'angle d'incidence et/ou l'angle de rotation du faisceau.

Le faisceau généré par la source de lumière 4, et éventuellement modifié par les moyens automatisés, est émis dans le dispositif de conversion multiplan MPLC. Par souci d'exhaustivité, on rappelle ci-dessous brièvement qu'un tel dispositif comprend au moins une pièce optique dont le profil de phase spatiale est configuré pour impartir une pluralité de transformations élémentaires à un rayonnement lumineux incident. La combinaison de ces transformations élémentaires permet d'opérer toutes transformations unitaires sur ce rayonnement incident. En d'autres termes, un tel dispositif peut être configuré pour transformer toute base orthonormée de modes spatiaux d'un espace d'entrée en toute autre base orthonormée de modes spatiaux d'un espace de sortie.

Le document FR3016973 présente un exemple particulier de mise en oeuvre d'un tel dispositif de conversion multiplan. Il comprend une pièce optique réfléchissante présentant une surface microstructurée, qui modifie spatialement la phase transverse d'un rayonnement lumineux incident, placée en vis-à-vis d'un miroir, de sorte à former une cavité multi passage permettant d'appliquer la pluralité de transformations élémentaires. Par « surface microstructurée», on signifie, à titre d'exemple, que la surface peut présenter des « pixels » dont les dimensions sont comprises entre quelques microns à quelques centaines de microns. Chaque pixel présente une élévation, par rapport à un plan moyen définissant la surface en question, comprise entre quelques microns et quelques centaines de microns. La pièce optique réfléchissante présentant une surface microstructurée peut être une lame de phase.

On pourra se référer aux différents documents cités de l'état de la technique pour bien comprendre comment la transformation répétée de la phase spatiale d'un rayonnement incident permet d'opérer une transformation unitaire choisie du rayonnement lumineux incident et comment on peut concevoir la pièce optique pour qu'elle mette en oeuvre une telle transformation. On se refera également à ces documents pour obtenir des exemples des méthodes de conception numériques des microstructures disposées sur la face principale de la pièce optique. Le modèle numérique de ces microstructures peut être employé pour fabriquer la pièce optique, par exemple par usinage, moulage et/ou gravure d'une pièce optique brute.

De nombreuses variantes à la configuration en cavité multi passage sont possibles. On peut ainsi envisager que le dispositif de conversion multiplan MPLC comprenne une pluralité de pièces optiques microstructurées, par exemple une pluralité de lames de phases réfléchissantes juxtaposées les unes aux autres. Cette pluralité de pièces optiques peut-être disposée sur le support pour former un premier chemin optique complexe, par exemple pour rechercher à rendre le dispositif de conversion multiplan très compact. Le miroir de la cavité multi passage peut être remplacé par une deuxième lame de phase réfléchissante microstructurée, pour doubler le nombre de transformations élémentaires opérées sur le rayonnement incident ou permettre, pour un nombre de réflexions données, de former une cavité multi passage deux fois plus compact.

Selon une autre variante, la pièce optique microstructurée n'est pas réfléchissante, mais transparente. On peut ainsi prévoir qu'une pièce optique microstructurée transparente, par exemple placée dans une cavité optique formée par deux miroirs placés en vis-à-vis l'un de l'autre, puisse intercepter une pluralité de fois le rayonnement lumineux incident pour y opérer les transformations. Il peut alternativement s'agir d'une pluralité de pièces optiques transparentes, disposées les unes derrière les autres le long du chemin optique de propagation du rayonnement.

On peut également envisager de combiner une ou plusieurs pièces optiques transparentes microstructurées avec une ou plusieurs pièces optiques réfléchissantes. D'autres pièces optiques non microstructurées, telles que des miroirs, des prismes peuvent également être placés le long du chemin optique, selon le besoin.

Quel que soit le mode de mise en oeuvre du dispositif de conversion multiplan MPLC d'un dispositif 2 pour changer la forme d'un faisceau lumineux cohérent conforme à l'invention, celui-ci applique une transformation au faisceau lumineux 6 conduisant à changer sa forme selon la position transverse, l'angle d'incidence et/ou l'angle de rotation du faisceau, vis-à-vis de l'axe de référence 7, présenté à son entrée.

Bien entendu, on pourra apporter à l'invention de nombreuses modifications sans sortir du cadre de celle-ci tel que défini par les revendications.

Le dispositif 2 peut notamment comprendre d'autres pièces optiques interceptant la propagation du faisceau lumineux 6 que celles qui ont été décrites. Il peut s'agir de miroirs, de lentilles ou de toute autre pièce permettant de contrôler la propagation du faisceau 6, par exemple pour le collimater ou pour chercher à rendre le dispositif de contrôle 2 compact.

**Revendications**

1. Dispositif (2) pour alterner entre différentes formes spécifiques d'un faisceau lumineux cohérent (6) généré par une source de lumière (4), le dispositif (2) comprenant un dispositif de conversion multiplan (MPLC) pour appliquer une transformation unitaire à un faisceau lumineux cohérent par une succession de transformations élémentaires de sa phase spatiale impartie par au moins une pièce optique, le dispositif de conversion multiplan (MPLC) étant disposé vis-à-vis de la source de lumière (4) pour que le faisceau lumineux cohérent (6) soit émis dans le dispositif de conversion multiplan (MPLC) selon un axe de référence (7), le dispositif pour alterner entre différentes formes spécifiques (2) comprenant des moyens automatisés (8), disposés en amont du dispositif de conversion multiplan (MPLC) et aptes à faire varier la position transverse et/ou l'angle d'incidence du faisceau (6) par rapport à l'axe de référence (7) et/ou à faire varier l'angle de rotation du faisceau (6) autour de l'axe de référence (7) ; le dispositif de conversion multiplan (MPLC) étant configuré pour transformer une variation de la position transverse et/ou de l'angle d'incidence et/ou de l'angle de rotation du faisceau lumineux cohérent (6) en un changement de la forme spécifique du faisceau lumineux cohérent (6), **caractérisé en ce que** la pièce optique a une surface microstructurée.

2. Dispositif (2) selon la revendication précédente dans lequel les moyens automatisés (8) comprennent un miroir placé sur la trajectoire du faisceau lumineux (6) et dont on peut commander l'orientation pour faire varier l'angle d'incidence du faisceau lumineux par rapport à l'axe de référence (7).

3. Dispositif (2) selon la revendication 1, dans lequel les moyens automatisés (8) comprennent deux miroirs dont on peut commander l'orientation pour décaler transversalement le faisceau lumineux (6) par rapport à l'axe de référence (7).

4. Dispositif (2) selon l'une des revendications précédentes, dans lequel le dispositif de conversion multiplan est configuré pour transformer une variation de la position transverse du faisceau (6) en un changement de la forme spécifique du faisceau lumineux (6).

5. Dispositif (2) selon l'une des revendications précédentes dans lequel la source de lumière (4) est une source laser.

6. Dispositif (2) selon la revendication 1 dans lequel le dispositif de conversion multiplan comprend un miroir placé en vis-à-vis de la surface microstructurée.

7. Dispositif (2) selon la revendication 1 dans lequel la surface microstructurée présente des pixels, chaque pixel présentant une élévation par rapport à un plan moyen définissant la surface.

8. Dispositif (2) selon la revendication précédente dans lequel l'élévation présentée par chaque pixel est comprise entre quelques microns et quelques centaines de microns.

9. Système d'usinage par faisceau laser comprenant une source de lumière et un dispositif pour changer la forme d'un faisceau lumineux (6) selon l'une des revendications précédentes.

**Patentansprüche**

1. Vorrichtung (2) zum Wechseln zwischen unterschiedlichen spezifischen Formen eines kohärenten Lichtstrahls (6), der durch eine Lichtquelle (4) erzeugt wird, die Vorrichtung (2) umfassend eine Mehrebenenumwandlungsvorrichtung (MPLC) zum Anlegen einer einheitlichen Transformation an einen kohärenten Lichtstrahl durch eine Folge von elementaren Transformationen seiner räumlichen Phase, die durch mindestens ein optisches Teil vermittelt wird, wobei die Mehrebenenumwandlungsvorrichtung (MPLC) gegenüber der Lichtquelle (4) angeordnet ist, so dass der kohärente Lichtstrahl (6) in der Mehrebenenumwandlungsvorrichtung (MPLC) entlang einer Referenzachse (7) emittiert wird, die Vorrichtung zum Wechseln zwischen unterschiedlichen spezifischen Formen (2) umfassend automatisierte Mittel (8), die stromaufwärts der Mehrebenenumwandlungsvorrichtung (MPLC) angeordnet sind und in der Lage sind, die Querposition und/oder den Einfallswinkel des Strahls (6) relativ zu der Referenzachse (7) zu variieren und/oder den Drehwinkel des Strahls (6) um die Referenzachse (7) herum zu variieren; wobei die Mehrebenenumwandlungsvorrichtung (MPLC) konfiguriert ist, um eine Variation der Querposition und/oder des Einfallswinkels und/oder des Drehwinkels des kohärenten Lichtstrahls (6) in eine Veränderung der spezifischen Form des kohärenten Lichtstrahls (6) zu transformieren, **dadurch gekennzeichnet, dass** das optische Teil eine mikrostrukturierte Oberfläche besitzt.

2. Vorrichtung (2) nach dem vorstehenden Anspruch, wobei die automatisierten Mittel (8) einen Spiegel umfassen, der auf dem Weg des Lichtstrahls (6) platziert ist und dessen Ausrichtung gesteuert werden kann, um den Einfallswinkel des Lichtstrahls relativ zu der Referenzachse (7) zu variieren.

3. Vorrichtung (2) nach Anspruch 1, wobei die automatisierten Mittel (8) zwei Spiegel umfassen, deren Ausrichtung gesteuert werden kann, um den Lichtstrahl (6) relativ zu der Referenzachse (7) quer zu verschieben.

4. Vorrichtung (2) nach einem der vorstehenden Ansprüche, wobei die Mehrebenenumwandlungsvorrichtung konfiguriert ist, um eine Variation der Querposition des Strahls (6) in eine Veränderung der spezifischen Form des Lichtstrahls (6) zu transformieren.

5. Vorrichtung (2) nach einem der vorstehenden Ansprüche, wobei die Lichtquelle (4) eine Laserquelle ist.

6. Vorrichtung (2) nach Anspruch 1, wobei die Mehrebenenumwandlungsvorrichtung einen Spiegel umfasst, der gegenüber der mikrostrukturierten Oberfläche platziert ist.

7. Vorrichtung (2) nach Anspruch 1, wobei die mikrostrukturierte Oberfläche Pixel aufweist, wobei jedes Pixel eine Erhebung relativ zu einer die Oberfläche definierenden mittleren Ebene aufweist.

8. Vorrichtung (2) nach dem vorstehenden Anspruch, wobei die durch jedes Pixel aufgewiesene Erhebung zwischen einigen Mikrometern und einigen Hundert Mikrometern liegt.

9. Laserstrahlbearbeitungssystem, umfassend eine Lichtquelle und eine Vorrichtung zum Verändern der Form eines Lichtstrahls (6) nach einem der vorstehenden Ansprüche.

**Claims**

1. A device (2) for alternating between different specific shapes of a coherent light beam (6) generated by a light source (4), the device (2) comprising a multi-plane conversion device (MPLC) for applying a unitary transformation to a coherent light beam by a succession of elementary transformations of its spatial phase imparted by at least one optical part, the multi-plane conversion device (MPLC) being arranged facing the light source (4) so that the coherent light beam (6) is emitted in the multi-plane conversion device (MPLC) along a reference axis (7), the device for alternating between different specific shapes (2) comprising automated means (8) which are arranged upstream of the multi-plane conversion device (MPLC) and are able to vary the transverse position and/or the angle of incidence of the beam (6) relative to the reference axis (7) and/or to vary the angle of rotation of the beam (6) about the reference axis (7); the multi-plane conversion device (MPLC) being configured to transform a variation in the transverse position and/or the angle of incidence and/or the angle of rotation of the coherent light beam (6) into a change in the specific shape of the coherent light beam (6), **characterized in that** the optical part has a micro-structured surface.

2. The device (2) according to the preceding claim, wherein the automated means (8) comprise a mirror which is placed on the trajectory of the light beam (6) and of which the orientation can be controlled in order to vary the angle of incidence of the light beam relative to the reference axis (7).

3. The device (2) according to claim 1, wherein the automated means (8) comprise two mirrors of which the orientation can be controlled in order to shift the light beam (6) transversely relative to the reference axis (7).

4. The device (2) according to any of the preceding claims, wherein the multi-plane conversion device is configured to transform a variation in the transverse position of the beam (6) into a change in the specific shape of the light beam (6).

5. The device (2) according to any of the preceding claims, wherein the light source (4) is a laser source.

6. The device (2) according to claim 1, wherein the multi-plane conversion device comprises a mirror which is placed facing the micro-structured surface.

7. The device (2) according to claim 1, wherein the micro-structured surface has pixels, each pixel exhibiting an elevation relative to a mid-plane which defines the surface.

8. The device (2) according to the preceding claim, wherein the elevation exhibited by each pixel is between a few microns and a few hundred microns.

9. A laser beam machining system, comprising a light source and a device for changing the shape of a light beam (6) according to any of the preceding claims.

**Fig. 1**

**Fig. 2a**

**Fig. 2b**

Fig. 3a

Fig. 3b

Fig. 3c

**Fig. 4**

**Fig. 5**

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2469221 A

- FR 3016973

**Littérature non-brevet citée dans la description**

- Programmable unitary spatial mode manipulation. *Journal of the Optical Society of America A,* vol. 27 (11